# EUROPEAN PATENT APPLICATION

(11) **EP 2 608 470 A1**
(43) Date of publication of application: **26.06.2013**
(21) Application number: 12195410.1
(22) Date of filing: 04.12.2012
(51) Int. Cl.: H04L 12/931

(54) **Method and apparatus for achieving energy saving of data switching device**

(30) Priority: 23.12.2011 CN 201110439290
(71) Applicant: Huawei Technologies Co., Ltd., Longgang District, Shenzhen Guangdong 518129 (CN)
(72) Inventor: Yang, Xueren, 518129 Shenzhen (CN); Tan, Lin, 518129 Shenzhen (CN); Li, Jianzhao, 518129 Shenzhen (CN); Shi, Zhen, 518129 Shenzhen (CN)
(74) Representative: Thun, Clemens

(57) **Abstract**

Embodiments of the present invention provide a method and an apparatus for achieving energy saving of a data switching device. The apparatus acquires a working model, where the working model includes correspondence between a working mode and time within a working cycle of the data switching device, the working mode can identify a bandwidth capacity in the working mode, and controls a data processing module in the data switching device to work according to the working model, so that the data processing module works under a bandwidth capacity identified by a corresponding working mode at the time. In the technical solutions of the embodiments of the present invention, the power consumption of the data processing module in the data switching device can be reduced in the idle time period, thereby effectively achieving energy saving.

## Description

### FIELD

Embodiments of the present invention relate to the field of network technologies, and in particular, to a method and an apparatus for achieving energy saving of a data switching device.

### BACKGROUND

With the rapid development of the current network technologies, demands such as high bandwidth to the home and enterprise cloud services increase obviously. As the most convenient access manner of high bandwidth access, the application proportion of local area network (Local Area Network, hereinafter referred to as LAN) access grows increasingly.

In LAN access technology, a data switching device has a significant traffic feature, for example, traffic in different time periods varies a lot, and even a case that resources are completely idle occurs in some time periods, which provides a chance of saving energy for the data switching device. The Ethernet energy-saving standard IEEE802.3az in the prior art is a first technical standard which aims at dynamic energy saving. The Ethernet standard specifies that an Ethernet physical layer (Physical Layer; hereinafter referred to as PHY) chip in the data switching device negotiates with a peer end to automatically enter a low power consumption mode after data transfer is completed. However, the Ethernet physical layer chip is quickly awakened to enter a normal operation state when the data arrives, so as to implement an energy-saving characteristic of the PHY chip in the data switching device. It is proved by existing experiments that in an ideal case, the energy can be saved by 70%.

The foregoing Ethernet energy-saving standard IEEE802.3az in the prior art can only solve the energy-saving of the PHY chip. In addition to the PHY chip, data processing modules, such as a central processing unit (Central Processing Unit; hereinafter referred to as CPU) and a network processor in the device, in the data switching device, all have relatively high power consumption, and are main power consumption units in the data switching device. However, there is no solution in the prior art for controlling the data processing modules in the data switching device to reduce the power consumption.

### SUMMARY

The present invention provide a method and an apparatus for achieving energy saving of a data switching device, so as to solve a problem in the prior art that there is no solution for controlling a data processing module in the data switching device to reduce power consumption.

A first aspect of the present invention provides a method for achieving energy saving of a data switching device, including:
acquiring a working model, where the working model includes correspondence between a working mode and time within a working cycle of the data switching device, the working mode can identify a bandwidth capacity in the working mode, and a bandwidth capacity which is of the data switching device and is identified by a corresponding working mode in an idle time period is less than a bandwidth capacity which is of the data switching device and is identified by a corresponding working mode in a working time period; and
controlling a data processing module in the data switching device to work according to the working model, so that the data processing module works under a bandwidth capacity identified by a corresponding working mode at the time.

Optionally, the method according to the first aspect further includes: establishing the working model.

In a possible implementation of the first aspect, the establishing the working model includes:
receiving an input working time period and the working mode which corresponds to the working time period, and an input idle time period and the working mode which corresponds to the idle time period; and
establishing, according to the working time period and the working mode which corresponds to the working time period, and the idle time period and the working mode which corresponds to the idle time period, a working model which includes the correspondence between the working mode and the time.

In another possible implementation of the first aspect, the establishing the working model includes:
acquiring a traffic model within the working cycle, where the traffic model includes correspondence between traffic of the data switching device and the time within the working cycle;
performing per-control adjustment on the traffic model to acquire a pre-control traffic model, where the pre-control traffic model includes correspondence between the traffic after the pre-control adjustment processing and the time; and
making statistics according to a predefined working mode of the data switching device and the pre-control traffic model to acquire the working model.

Optionally, the performing the per-control adjustment on the traffic model to acquire the pre-control traffic model includes:
performing pre-control adjustment on the traffic model according to a preset proportion or a preset bandwidth redundancy value to acquire the pre-control traffic model.

Based on all the above implementations, optionally, the controlling the data processing module in the data switching device to work according to the working model, so that the data processing module works under the bandwidth capacity identified by the corresponding working mode at the time, includes:
adjusting, according to the working model, one or more of a working frequency of the data processing module and the number of working modules required in the data processing module, so that the data processing module can work under the bandwidth capacity identified by the corresponding working mode at the time, thereby enabling the data processing module to work under the bandwidth capacity identified by the corresponding working mode at the time.

A second aspect of the present invention provides an apparatus for achieving energy saving of a data switching device, including:
an acquiring module, configured to acquire a working model, where the working model includes correspondence between a working mode and time within a working cycle of the data switching device, the working mode can identify a bandwidth capacity in the working mode, and a bandwidth capacity which is of the data switching device and is identified by a corresponding working mode in an idle time period is less than a bandwidth capacity which is of the data switching device and is identified by a corresponding working mode in a working time period; and
a control module, configured to control a data processing module in the data switching device to work according to the working model acquired by the acquiring module, so that the data processing module works under a bandwidth capacity identified by a corresponding working mode at the time.

Optionally, the apparatus according to the second aspect further includes: an establishing module, configured to establish the working model.

In a possible implementation of the second aspect, the establishing module includes:
a receiving unit, configured to receive an input working time period and the working mode which corresponds to the working time period, and an input idle time period and the working mode which corresponds to the idle time period; and
an establishing unit, configured to establish, according to the working time period and the working mode which corresponds to the working time period, and the idle time period and the working mode which corresponds to the idle time period, a working model which includes correspondence between the working mode and the time.

In another possible implementation of the second aspect, the establishing module includes:
an acquiring unit, configured to acquire a traffic model within the working cycle, where the traffic model includes correspondence between traffic of the data switching device and time within the working cycle;
an adjusting unit, configured to perform pre-control adjustment on the traffic model to acquire a pre-control traffic model, where the pre-control traffic model includes correspondence between the traffic after the pre-control adjustment processing and the time; and
a statistics making unit, configured to make statistics according to a predefined working mode of the data switching device and the pre-control traffic model to acquire the working model.

Optionally, the adjusting unit is configured to perform pre-control adjustment on the traffic model according to a preset proportion or a preset bandwidth redundancy value to acquire the pre-control traffic model.

Based on all the above implementations, optionally, the control module is specifically configured to adjust, according to the working model, one or more of a working frequency of the data processing module and the number of working modules required in the data processing module, so that the data processing module can work under the bandwidth capacity identified by the corresponding working mode at the time, thereby enabling the data processing module to work under the bandwidth capacity identified by the corresponding working mode at the time.

By adopting the foregoing technical solutions of the present invention, an effective control solution for the data processing module can be provided, so that the power consumption of the data processing module, such as a CPU and a network processor of the device, in the data switching device can be reduced in the idle time period, thereby effectively achieving energy saving.

### BRIEF DESCRIPTION OF THE DRAWINGS

To illustrate the technical solutions in the embodiments of the present invention more clearly, the accompanying drawings required for describing the embodiments are introduced briefly in the following. Apparently, the accompanying drawings in the following description are some embodiments of the present invention, and persons of ordinary skill in the art can further derive other drawings according to these accompanying drawings without making creative efforts.
FIG. 1 is a flow chart of a method for achieving energy saving of a data switching device according to an embodiment of the present invention;
FIG. 2 is a flow chart of a method for achieving energy saving of a data switching device according to another embodiment of the present invention;
FIG. 3 is a schematic diagram of a working model according to an embodiment of the present invention;
FIG. 4 is a schematic structural diagram of an apparatus for achieving energy saving of a data switching device according to an embodiment of the present invention;
FIG. 5 is a schematic structural diagram of an apparatus for achieving energy saving of a data switching device according to another embodiment of the present invention; and
FIG. 6 is a schematic structural diagram of an apparatus for achieving energy saving of a data switching device according to another embodiment of the present invention.

### DETAILED DESCRIPTION OF THE EMBODIMENTS

To make the objectives, technical solutions, and advantages of the embodiments of the present invention clearer, the technical solutions in the embodiments of the present invention are clearly and completely described in the following with reference to the accompanying drawings in the embodiments of the present invention. Apparently, the embodiments in the following description are merely a part rather than all of the embodiments of the present invention. All other embodiments acquired by persons of ordinary skill in the art based on the embodiments of the present invention without making creative efforts shall fall within the protection scope of the present invention.

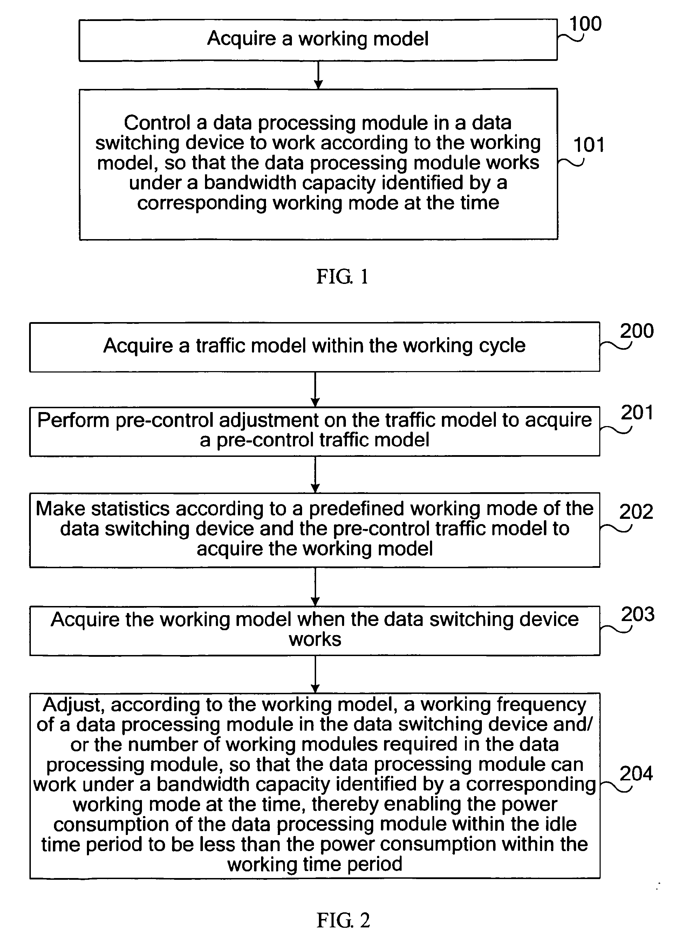

FIG. 1 is a flow chart of a method for achieving energy saving of a data switching device according to an embodiment of the present invention. An executive subject of the method for achieving energy saving of the data switching device in this embodiment is an apparatus for achieving energy saving of the data switching device, for example, the apparatus for achieving energy saving of the data switching device may be set in the data switching device. As shown in FIG. 1, the method for achieving energy saving of the data switching device of this embodiment may specifically include the following steps:
100: Acquire a working model.

The working model in this embodiment includes correspondence between a working mode and time within a working cycle of the data switching device, the working mode can identify a bandwidth capacity in the working mode, and a bandwidth capacity which is of the data switching device and is identified by a corresponding working mode in an idle time period is less than a bandwidth capacity which is of the data switching device and is identified by a corresponding working mode in a working time period.

101: Control a data processing module in the data switching device to work according to the working model, so that the data processing module works under a bandwidth capacity identified by a corresponding working mode at the time.

In this embodiment, the apparatus for achieving the energy saving of the data switching device controls the data processing module in the data switching device to work according to the working model, so that the data processing module works under the bandwidth capacity identified by the corresponding working mode at the time, thereby enabling the power consumption of the data processing module in the idle time period to be less than the power consumption in the working time period.

In the method for achieving energy saving of the data switching device of this embodiment, by adopting the foregoing technical solutions, an effective control solution for the data processing module can be provided, so that the power consumption of the data processing module, such as a CPU and a network processor in the device, in the data switching device can be reduced in the idle time period, thereby effectively achieving energy saving.

Optionally, the working model of the foregoing embodiment may include correspondence between multiple working modes and time. The correspondence between the working modes and the time may be presented as a two-dimensional ladder line. Generally, a same working mode may be adopted in a time period. Specifically, a certain period of time of the working cycle corresponds to a working mode, and each working mode can identify a bandwidth capacity. For example, if one day is taken as a working cycle, the correspondence between four working modes and the time may be included in one day. For the time periods from 0:00 to 7:30 and from 20:00 to 24:00, correspondence between a first working mode and the two time periods is correspondingly set, and since the data switching device in the two time periods corresponding to the first working mode is in an idle state, a bandwidth capacity identified by the first working mode may be correspondingly adjusted to the minimum, for example, may be set to 400 Mbps. For the time periods from 7:30 to 9:00 and from 17:30 to 19:30, correspondence between a second working mode and the two time periods is correspondingly set, and since the data switching device in the two time periods corresponding to the second working mode is not in the busiest working state, a bandwidth capacity identified by the second working mode may be correspondingly adjusted to be a little higher relative to the bandwidth capacity identified by the first working mode, for example, may be set to 600 Mbps. For the time period from 11:30 to 13:30, correspondence between a third working mode and this time period is correspondingly set, and since the data switching device in this time period corresponding to the third working mode is in a relatively busy working state, a bandwidth capacity identified by the third working mode may be correspondingly adjusted to be a little higher than the bandwidth capacity identified by the second working mode, for example, may be set to 800 Mbps. For two time periods from 9:00 to 11:30 and from 13:30 to 17:30, correspondence between a fourth working mode and the time periods is correspondingly set, and since the data switching device in the two time periods corresponding to the fourth working mode is in the busiest working state, a bandwidth capacity identified by the fourth working mode may be correspondingly adjusted to be the highest in a whole working cycle, for example, may be set to 1000 Mbps. The foregoing solution is just an introduction of one scenario, for another application scenario, such as an application scenario where a working cycle is set by weeks or months, the setting may be performed with reference to the foregoing solution, which is not repeatedly described here again.

Optionally, on the basis of the method for achieving energy saving of the data switching device in the foregoing embodiment, and before step 100, the following step may be further included: 102: Establish the working model.

For example, step 102 of establishing the working model may specifically include the following steps:
(1) receiving an input working time period and a working mode which corresponds to the working time period, and an input idle time period and a working mode which corresponds to the idle time period; and
(2) establishing a working model including correspondence between the working model and the time according to the working time period and the working mode which corresponds to the working time period, and the idle time period and the working mode which corresponds to the idle time period.

The foregoing steps (1) and (2) may be understood as a manner of manually setting the working model. For example, staff members may input, through a man-machine interface module on the data switching device, the working time period and the working mode which corresponds to the working time period, and the idle time period and the working mode which corresponds to the idle time period. And then, the apparatus for achieving energy saving of the data switching device receives the input working time period and the working mode which corresponds to the working time period, and the input idle time period and the working mode which corresponds to the idle time period, and establishes correspondence between the working mode and the time to acquire the working model. It should be noted that, in this embodiment, the working mode which corresponds to the working state or the idle state may include multiple kinds.

Optionally, on the basis of the method for achieving energy saving of the data switching device of the foregoing embodiment, in step 101, the controlling the data processing module in the data switching device to work according to the working model, so that the power consumption of the data processing module in the idle time period is less than the power consumption in the working time period, includes: adjusting, according to the working model, one or more of a working frequency of the data processing module in the data switching device and the number of working modules required in the data processing module, so that the data processing module can work under the bandwidth capacity identified by the corresponding working mode at the time, that is, the working frequency of the data processing module in the corresponding working mode in the working time period in the working model is higher than the working frequency of the data processing module in the corresponding working mode in the idle time period; and/or the number of the working modules required in the data processing module in the corresponding working mode in the working time period in the working model is greater than the number of the working modules required in the data processing module in the corresponding working mode in the idle time period. Therefore, the power consumption of the data processing module in the idle time period may be less than the power consumption in the working time period. For example, the data processing module may be one or more of the CPU and the network processor in the device.

For another example, in step 102 of establishing the working model, specifically, the working model may also be acquired, according to the working cycle of the data switching device, through statistics by the apparatus for achieving energy saving of the data switching device, which is as described in the embodiment shown in FIG. 2 in the following.

FIG. 2 is a flow chart of a method for achieving energy saving of a data switching device according to another embodiment of the present invention. The method for achieving energy saving of the data switching device of this embodiment gives a further detailed introduction to the technical solutions of the embodiment of the present invention on the basis of the foregoing embodiment shown in FIG. 1. The executive body of the method for achieving energy saving of the data switching device of this embodiment is still an apparatus for achieving energy saving of the data switching device. As shown in FIG. 2, the method for achieving energy saving of the data switching device of this embodiment may specifically include the following steps:
200: Acquire a traffic model within the working cycle.

The traffic model in this embodiment includes correspondence between the traffic of the data switching device and the time within the working cycle. For example, the corresponding traffic of the data switching device at each time point (that is, moment). The acquiring the traffic model within the working cycle may be acquired based on the statistics of the time and the traffic within the working cycle that are made by the apparatus for achieving energy saving of the data switching device.
201: Perform pre-control adjustment on the traffic model to acquire a pre-control traffic model;

The pre-control traffic model in this embodiment includes correspondence between the traffic after the pre-control adjustment processing and the time.

For example, in step 201, the performing the pre-control adjustment on the traffic model to acquire the pre-control traffic model may include: performing pre-control adjustment on the traffic model according to a preset proportion or a preset bandwidth redundancy value to acquire the pre-control traffic model.

For example, the performing the pre-control adjustment on the traffic model according to the preset proportion or the preset bandwidth redundancy value to acquire the pre-control traffic model may include: increasing, according to the preset proportion, the traffic within the working cycle of a data processing module in the traffic model, to acquire the pre-control traffic model. Optionally, the traffic at each time point within the working cycle is increased by 30%, or 50%, or 100% according to a proportion.

For another example, the performing the pre-control adjustment on the traffic model according to the preset bandwidth redundancy value to acquire the pre-control traffic model may include: increasing the traffic within the working cycle of the data processing module in the traffic model by the preset bandwidth redundancy value to acquire the pre-control traffic model. Optionally, the traffic at each time point within the working cycle may be increased by 100 Mbps, 200 Mbps or 300 Mbps according to actual demands.

202: Make statistics according to a predefined working mode of the data switching device and the pre-control traffic model to acquire the working model.

For example, the data switching device may set several predefined working modes according to the different busy degrees during actual working, and a bandwidth capacity in the current predefined working mode may be identified for each predefined working mode. Therefore, the apparatus for achieving energy saving of the data switching device may make statistics according to the predefined working mode of the data switching device and a bandwidth capacity corresponding to the working mode, and further according to the time identified by the acquired pre-control traffic model and the corresponding bandwidth, and then set the working model. For example, the specific method may be as follows: first acquiring a bandwidth capacity corresponding to each working mode; then acquiring a bandwidth corresponding to each time point in the pre-control traffic model; and next, acquiring the working mode corresponding to the time according to the bandwidth corresponding to each time point in the pre-control traffic model, so that the statistics of all of the time points in the pre-control traffic model may be made to acquire the working model. The acquiring the working mode corresponding to the time according to the bandwidth corresponding to each time point in the pre-control traffic model may specifically be: acquiring a maximum bandwidth which is greater than the bandwidth corresponding to the time and is the closest to the bandwidth corresponding to the time from a maximum bandwidth represented by the bandwidth capacity corresponding to each working mode, so that the working mode which corresponds to the closest maximum bandwidth is used as the working mode which corresponds to the time.

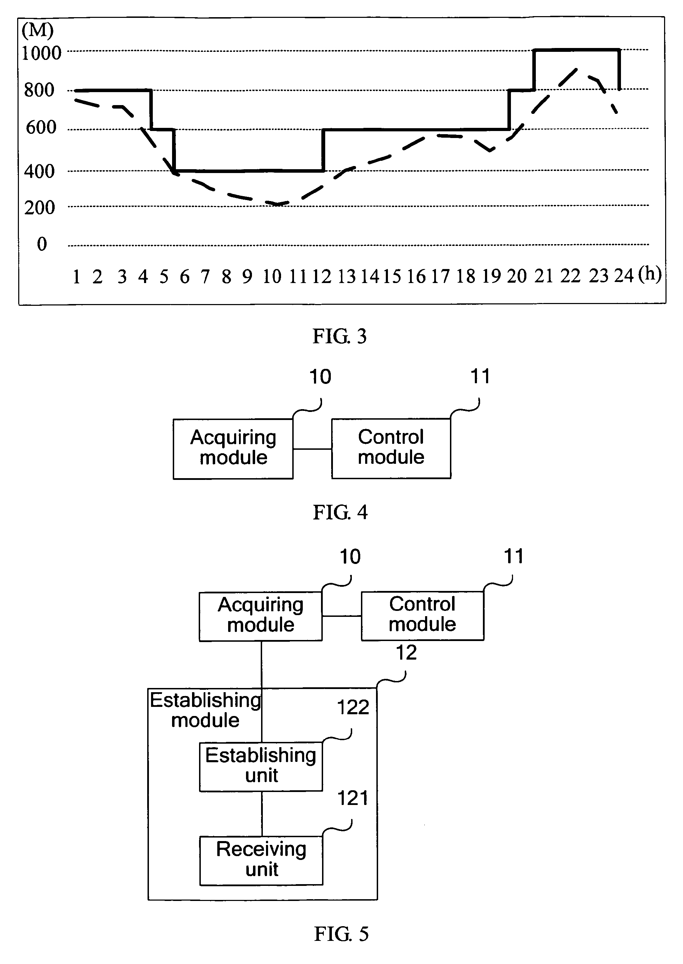

For example, FIG. 3 is a schematic diagram of a working model according to an embodiment of the present invention. As shown in FIG. 3, a solid line represents a working model acquired through statistics, and a dotted line represents an acquired pre-control traffic model. FIG. 3 shows a working model taking 24 h as an example. As shown in FIG. 3, a working mode A with a bandwidth capacity being 400 Mbps, a working mode B with a bandwidth being 600 Mbps, a working mode C with a bandwidth being 800 Mbps, and a working mode D with a bandwidth being 1000 Mbps may be pre-defined in the data switching device. However, it may be determined according to the pre-control traffic model that which working mode may be specifically used in which time period, so that a proper and closest working mode can be adopted to correspond to each time point in the pre-control traffic model. For example, the working mode A is adopted in a time period with the bandwidth less than 400 Mbps in the pre-control traffic model; the working mode B is adopted in a time period with the bandwidth greater than 400 Mbps and less than 600 Mbps in the pre-control traffic model; the working mode C is adopted in the time period with the bandwidth greater than 600 Mbps and less than 800 Mbps in the pre-control traffic model; and the working mode D is adopted in the time period with the bandwidth greater than 800 Mbps and less than 1000 Mbps in the pre-control traffic model. Therefore, the working model shown in FIG. 3 may be acquired.

The foregoing embodiment is just a method for acquiring the working model through statistics according to the predefined working mode of the data switching device and the pre-control traffic model. In actual application, the foregoing working model may also be acquired through statistics with reference to the related prior art, which is not repeatedly described here again.

The working model includes the correspondence between the working mode and the time within the working cycle of the data switching device; each working mode within the working cycle can identify the bandwidth capacity in the working mode, and a bandwidth capacity which is of the data switching device and is identified by the corresponding working mode in an idle time period is less than a bandwidth capacity which is of the data switching device and is identified by the corresponding working mode in a working time period, thereby ensuring that the power consumption of the data switching device can be reduced in the idle time period, so as to achieve energy saving.

The foregoing steps 200 to 202 are another detailed implementation process of step 102 in the foregoing embodiment.

203: Acquire a working model when the data switching device works.

204: Adjust, according to the working model, one or more of a working frequency of the data processing module in the data switching device and the number of working modules required in the data processing module, so that the data processing module can work under the bandwidth capacity identified by the corresponding working mode at the time, thereby enabling the power consumption of the data processing module in the idle time period to be less than the power consumption in the working time period.

For example, the apparatus for achieving energy saving of the data switching device may enable, according to the working mode which corresponds to the time and the bandwidth capacity which corresponds to each working mode in the working model, the data processing module to work under the bandwidth capacity identified by the working mode corresponding to the time in the working model by adjusting one or more of the working frequency of the data processing module in the data switching device and the number of the working modules required in the data processing module. For example, at the working time 1, the bandwidth capacity corresponding to the working mode D is 1000 M, and in this case, the working frequency of the data processing module may be adjusted to be higher, and/or the number of the working modules required in the data processing module is increased, so as to ensure that the bandwidth capacity in the working mode D reaches 1000 M. At the idle time period 2, the bandwidth capacity corresponding to the working mode A is 400 M, and in this case, the working frequency of the data processing module is reduced to be less relative to that in the working time period 1, and/or the number of the working modules required in the data processing module is decreased, so as to implement that the bandwidth capacity in the working mode A reaches 400 M. Therefore, the power consumption of the data processing module in the idle time period 2 may be enabled to be less than the power consumption in the working time period 1.

For example, the data processing module in this embodiment may still be one or more of a CPU and a network processor of the device.

By adopting the foregoing technical solutions, the method for achieving energy saving of the data switching device of this embodiment can provide an effective control solution for the data processing module, so that the power consumption of the data processing module, such as the CPU and the network processor of the device, in the data switching device can be reduced in the idle time period, thereby effectively achieving energy saving.

Persons of ordinary skill in the art may understand that all or a part of the steps of the foregoing method embodiments may be implemented by a program instructing relevant hardware. The foregoing program may be stored in a computer readable storage medium. When the program runs, the steps of the foregoing method embodiments are performed. The foregoing storage medium may be various mediums capable of storing program codes, including a ROM, a RAM, a magnetic disk, or a compact disk, and so on.

FIG. 4 is a schematic structural diagram of an apparatus for achieving energy saving of a data switching device according to an embodiment of the present invention. As shown in FIG. 4, the apparatus for achieving energy saving of the data switching device in the embodiment may specifically include: an acquiring module 10 and a control module 11.

In the apparatus for achieving energy saving of the data switching device of this embodiment, the acquiring module 10 is configured to acquire a working model, where the working model includes correspondence between a working mode and time within a working cycle of the data switching device, the working mode can identify a bandwidth capacity in the working mode, and a bandwidth capacity which is of the data switching device and is identified by a corresponding working mode in an idle time period is less than a bandwidth capacity which is of the data switching device and is identified by a corresponding working mode in a working time period. The control module 11 is connected to the acquiring module 10. The control module 11 is configured to control a data processing module in the data switching device to work according to the working model acquired by the acquiring module 10, so that the data processing module works under a bandwidth capacity identified by a corresponding working mode at the time. In this way, through the control of the control module 11, the data processing module can work under the bandwidth capacity identified by the corresponding working mode at the time, so that the power consumption of the data processing module in the idle time period is less than the power consumption in the working time period.

In the apparatus for achieving energy saving of the data switching device of this embodiment, a mechanism for implementing control by adopting the foregoing modules is the same as the implementation mechanism of the foregoing relevant method embodiments. Reference may be made to the foregoing description of the relevant method embodiments for the details, which is not repeatedly described here again.

By adopting the foregoing technical solutions, the apparatus for achieving energy saving of the data switching device of this embodiment can provide an effective control solution for the data processing module, so that the power consumption of the data processing module, such as a CPU and a network processor of the device, in the data switching device can be reduced in the idle time period, thereby effectively achieving energy saving.

FIG. 5 is a schematic structural diagram of an apparatus for achieving energy saving of a data switching device according to another embodiment of the present invention. As shown in FIG. 5, on the basis of the embodiment shown in the foregoing FIG. 4, the apparatus for achieving energy saving of the data switching device of this embodiment may further include the following technical solutions:

The apparatus for achieving energy saving of the data switching device in this embodiment further includes an establishing module 12. The establishing module 12 is configured to establish the working model. In this case, the corresponding acquiring module 10 is connected to the establishing module 12, and the acquiring module 10 is configured to acquire the working model from the establishing module 12.

Further, optionally, in the apparatus for achieving energy saving of the data switching device in this embodiment, the establishing module 12 may include a receiving unit 121 and an establishing unit 122. The receiving unit 121 is configured to receive an input working time period and a working mode which corresponds to the working time period, and an input idle time period and a working mode which corresponds to the idle time period. For example, the receiving unit 121 may be configured to receive a working time period and a working mode which corresponds to the working time period, and an idle time period and a working mode which corresponds to the idle time period, where the time periods and the working modes are input by staff members through a man-machine interface input module. The establishing unit 122 is connected to the receiving unit 121. The establishing unit 122 is configured to establish, according to the working time period and the working mode which corresponds to the working time period, and the idle time period and the working mode which corresponds to the idle time period, correspondence between the working mode and the time to acquire the foregoing working model, where the time periods and the working modes are received by the receiving unit 121. In this case, correspondingly, the acquiring module 10 is connected to the establishing unit 122, and the acquiring module 10 is configured to acquire the working model from the establishing unit 122.

Further, optionally, in the apparatus for achieving energy saving of the data switching device of this embodiment, the control module 11 is specifically configured to adjust a working frequency of a data processing module in the data switching device, so that the data processing module can work under the bandwidth capacity identified by the working mode which corresponds to the time, thereby enabling the power consumption of the data processing module in the idle time period to be less than the power consumption in the working time period.

Optionally, in the apparatus for achieving energy saving of the data switching device of this embodiment, the data processing module includes one or more of a CPU and a network processor of the device.

For the apparatus for achieving energy saving of the data switching device of this embodiment, a mechanism for implementing energy saving of the data switching device by adopting the foregoing modules is the same as the implementation mechanism of the foregoing relevant method embodiments. Reference may be made to the foregoing description of the relevant method embodiments for the details, which is not repeatedly described here again.

By adopting the foregoing technical solutions, the apparatus for achieving energy saving of the data switching device of this embodiment can provide an effective control solution for the data processing module, so that the power consumption of the data processing module, such as the CPU and the network processor of the device, in the data switching device can be reduced in the idle time period, thereby effectively achieving energy saving.

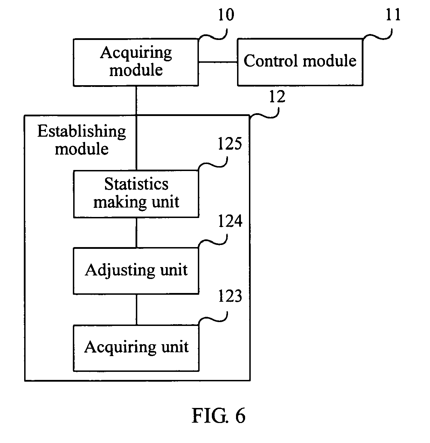

FIG. 6 is a schematic structural diagram of an apparatus for achieving energy saving of a data switching device according to another embodiment of the present invention. As shown in FIG. 6, on the basis of the foregoing embodiment shown in FIG. 4, the apparatus for achieving energy saving of the data switching device of this embodiment may further include the following technical solutions:

Similarly, the apparatus for achieving energy saving of the data switching device of this embodiment also includes an establishing module 12. The establishing module 12 is configured to establish the working model. In this case, a corresponding acquiring module 10 is connected to the establishing module 12, and the acquiring module 10 is configured to acquire the working model from the establishing module 12.

Further, optionally, in the apparatus for achieving energy saving of the data switching device in this embodiment, the establishing module 12 may include an acquiring unit 123, an adjusting unit 124, and a statistics making unit 125. The acquiring unit 123 is configured to acquire a traffic model within the foregoing working cycle, where the traffic model includes correspondence between traffic of the data switching device and the time within the working cycle. The adjusting unit 124 is connected to the acquiring unit 123. The adjusting unit 124 is configured to perform pre-control adjustment on the traffic model acquired by the acquiring unit 123 to acquire a pre-control traffic model, where the pre-control traffic model includes correspondence between the traffic after the pre-control adjustment processing and the time. The statistics making unit 125 is connected to the adjusting unit 124, the statistics making unit 125 is configured to make statistics according to a predefined working mode of the data switching device and the pre-control traffic model acquired by the adjusting unit 124 to acquire the working model. In this case, correspondingly, the acquiring module 10 is connected to the statistics making unit 125, and the acquiring module 10 is configured to acquire the working model from the statistics making unit 125.

For example, the statistics making unit 125 make statistics according to the predefined working mode of the data switching device and the pre-control traffic model acquired by the adjusting unit 124 to acquire the working model, which may specifically be: the statistics making unit 125 first acquires a bandwidth capacity corresponding to each working mode; then acquires a bandwidth corresponding to the time in the pre-control traffic model that is acquired by the adjusting unit 124; next acquires a working mode corresponding to the time according to the bandwidth corresponding to the time in the pre-control traffic model, so that the statistics on all of the time points in the pre-control traffic model may be made to acquire the working model. The acquiring the working mode corresponding to the time according to the bandwidth corresponding to the time in the pre-control traffic model may specifically be: acquiring a maximum bandwidth which is greater than the bandwidth corresponding to the time and is the closest to the bandwidth corresponding to the time from the maximum bandwidth represented by the bandwidth capacity corresponding to each working mode, so that the working mode which corresponds to the closest maximum bandwidth is used as the working mode which corresponds to the time.

Further, optionally, the adjusting unit 124 may be configured to perform pre-control adjustment on the traffic model according to a preset proportion or a preset bandwidth redundancy value to acquire the pre-control traffic model. For example, the adjusting unit 124 is specifically configured to increase, according to the preset proportion, traffic within the working cycle of the data processing module in the traffic model, to acquire the pre-control traffic model. Alternatively, the adjusting unit 124 is specifically configured to increase the traffic within the working cycle of the data processing module in the traffic model by the preset bandwidth redundancy value to acquire the pre-control traffic model.

Similarly, optionally, further in the apparatus for achieving energy saving of the data switching device of this embodiment, the control module 11 is specifically configured to adjust, according to the working model, one or more of a working frequency of the data processing module and the number of working modules required in the data processing module, so that the data processing module can work under a bandwidth capacity identified by the working mode which corresponds to the time, thereby enabling the power consumption of the data processing module in an idle time period to be less than the power consumption within a working time period.

Optionally, in the apparatus for achieving energy saving of the data switching device of this embodiment, the data processing module includes one or more of a CPU and a network processor of the device.

For the apparatus for achieving energy saving of the data switching device of this embodiment, a mechanism for implementing energy saving of the data switching device by adopting the foregoing modules is the same as the implementation mechanism of the foregoing relevant method embodiments. Reference may be made to the foregoing description of the relevant method embodiments for the details, which is not repeatedly described here again.

By adopting the foregoing technical solutions, the apparatus for achieving energy saving of the data switching device of this embodiment can provide an effective control solution for the data processing module, so that the power consumption of the data processing module, such as the CPU and the network processor of the device, in the data switching device can be reduced in the idle time period, thereby effectively achieving energy saving.

Finally, it should be noted that the foregoing embodiments are merely used for describing the technical solutions of the present invention and not intended to limit the present invention. Although the present invention is described in detail with reference to the foregoing embodiments, persons of ordinary skill in the art should understood that they can still make modifications to the technical solutions recorded in the foregoing embodiments, or make equivalent replacements to some technical features in the technical solutions, and these modifications or replacements do not make the essence of the corresponding technical solutions depart from the scope of the technical solutions of the embodiments of the present invention.

## Claims

1. A method for achieving energy saving of a data switching device, comprising:
acquiring a working model, wherein the working model comprises correspondence between a working mode and time within a working cycle of the data switching device, the working mode can identify a bandwidth capacity in the working mode, and a bandwidth capacity which is of the data switching device and is identified by a corresponding working mode in an idle time period is less than a bandwidth capacity which is of the data switching device and is identified by a corresponding working mode in a working time period; and
controlling a data processing module in the data switching device to work according to the working model, so that the data processing module works under a bandwidth capacity identified by a corresponding working mode at the time.

2. The method according to claim 1, further comprising:
establishing the working model.

3. The method according to claim 2, wherein the establishing the working model comprises:
receiving an input working time period and the working mode which corresponds to the working time period, and an input idle time period and the working mode which corresponds to the idle time period; and
establishing, according to the working time period and the working mode which corresponds to the working time period, and the idle time period and the working mode which corresponds to the idle time period, a working model which comprises the correspondence between the working mode and the time.

4. The method according to claim 2, wherein the establishing the working model comprises:
acquiring a traffic model within the working cycle, wherein the traffic model comprises correspondence between traffic of the data switching device and the time within the working cycle;
performing per-control adjustment on the traffic model to acquire a pre-control traffic model, wherein the pre-control traffic model comprises correspondence between the traffic after the pre-control adjustment processing and the time; and
making statistics according to a predefined working mode of the data switching device and the pre-control traffic model to acquire the working model.

5. The method according to claim 4, wherein the performing the per-control adjustment on the traffic model to acquire the pre-control traffic model comprises:
performing pre-control adjustment on the traffic model according to a preset proportion or a preset bandwidth redundancy value to acquire the pre-control traffic model.

6. The method according to any one of claims 1 to 5, wherein the controlling the data processing module in the data switching device to work according to the working model, so that the data processing module works under the bandwidth capacity identified by the corresponding working mode at the time, comprises:
adjusting, according to the working model, one or more of a working frequency of the data processing module and the number of working modules required in the data processing module, so that the data processing module can work under the bandwidth capacity identified by the corresponding working mode at the time, thereby enabling the data processing module to work under the bandwidth capacity identified by the corresponding working mode at the time.

7. The method according to any one of claims 1 to 5, wherein the data processing module comprises one or more of a central processing unit and a network processor in the device.

8. An apparatus for achieving energy saving of a data switching device, comprising:
an acquiring module, configured to acquire a working model, wherein the working model comprises correspondence between a working mode and time within a working cycle of the data switching device, the working mode can identify a bandwidth capacity in the working mode, and a bandwidth capacity which is of the data switching device and is identified by a corresponding working mode in an idle time period is less than a bandwidth capacity which is of the data switching device and is identified by a corresponding working mode in a working time period; and
a control module, configured to control a data processing module in the data switching device to work according to the working model acquired by the acquiring module, so that the data processing module works under a bandwidth capacity identified by a corresponding working mode at the time.

9. The apparatus according to claim 8, further comprising:
an establishing module, configured to establish the working model.

10. The apparatus according to claim 9, wherein the establishing module comprises:
a receiving unit, configured to receive an input working time period and the working mode which corresponds to the working time period, and an input idle time period and the working mode which corresponds to the idle time period; and
an establishing unit, configured to establish, according to the working time period and the working mode which corresponds to the working time period, and the idle time period and the working mode which corresponds to the idle time period, a working model which comprises correspondence between the working mode and the time.

11. The apparatus according to claim 9, wherein the establishing module comprises:
an acquiring unit, configured to acquire a traffic model within the working cycle, wherein the traffic model comprises correspondence between traffic of the data switching device and time within the working cycle;
an adjusting unit, configured to perform pre-control adjustment on the traffic model to acquire a pre-control traffic model, wherein the pre-control traffic model comprises correspondence between the traffic after the pre-control adjustment processing and the time; and
a statistics making unit, configured to make statistics according to a predefined working mode of the data switching device and the pre-control traffic model to acquire the working model.

12. The apparatus according to claim 11, wherein the adjusting unit is configured to perform pre-control adjustment on the traffic model according to a preset proportion or a preset bandwidth redundancy value to acquire the pre-control traffic model.

13. The apparatus according to any one of claims 8 to 12, wherein the control module is specifically configured to adjust, according to the working model, one or more of a working frequency of the data processing module and the number of working modules required in the data processing module, so that the data processing module can work under the bandwidth capacity identified by the corresponding working mode at the time, thereby enabling the data processing module to work under the bandwidth capacity identified by the corresponding working mode at the time.

14. The apparatus according to any one of claims 8 to 12, wherein the data processing module comprises one or more of a central processing unit and a network processor in the device.
